(19) Europäisches Patentamt / European Patent Office / Office européen des brevets

(11) **EP 3 697 614 B1**

(12) **EUROPÄISCHE PATENTSCHRIFT**

(45) Veröffentlichungstag und Bekanntmachung des Hinweises auf die Patenterteilung:
**01.12.2021 Patentblatt 2021/48**

(21) Anmeldenummer: **18789646.9**

(22) Anmeldetag: **19.10.2018**

(51) Int Cl.:
**B32B 27/08** (2006.01)  **B32B 27/30** (2006.01)
**B32B 27/32** (2006.01)  **B32B 27/34** (2006.01)
**E04B 1/66** (2006.01)  **E04D 5/10** (2006.01)

(86) Internationale Anmeldenummer:
**PCT/EP2018/078709**

(87) Internationale Veröffentlichungsnummer:
**WO 2019/077107 (25.04.2019 Gazette 2019/17)**

(54) **BAUWERKSABDICHTBAHN SOWIE VERFAHREN ZUM HERSTELLEN EINER SOLCHEN**

EDIFICE SEALING WEB, AND PROCESS FOR MANUFACTURING SAME

BANDE D'ÉTANCHÉITÉ DE BÂTIMENT AINSI QUE PROCÉDÉ POUR LA FABRICATION D'UNE TELLE BANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.10.2017 DE 102017124619**

(43) Veröffentlichungstag der Anmeldung:
**26.08.2020 Patentblatt 2020/35**

(73) Patentinhaber: **BMI Steildach GmbH**
**61440 Oberursel (Taunus) (DE)**

(72) Erfinder:
• **SIMONIS, Udo**
  **63549 Ronneburg (DE)**
• **GLÜCK, Johannes**
  **97762 Hammelburg (DE)**

(74) Vertreter: **Stoffregen, Hans-Herbert**
**Patentanwalt**
**Friedrich-Ebert-Anlage 11b**
**63450 Hanau (DE)**

(56) Entgegenhaltungen:
**EP-A1- 1 500 493**

**Beschreibung**

Die Erfindung bezieht sich auf eine Bauwerksabdichtbahn, umfassend eine bauwerkfernliegende Dichtungsbahn, eine angrenzende bauwerkseitig verlaufende Barriereschicht auf Basis von Mischungen von Homopolyamiden und/oder Copolyamiden sowie eine Selbstklebeschicht. Auch nimmt die Erfindung Bezug auf ein Verfahren zur Herstellung einer solchen.

Um insbesondere Gebäudeflächen gegen Witterungseinflüsse gegen Kontaktmedien zu schützen, werden Abdichtungsbahnen aus Bitumen, Polymerbitumen, Kunststoff (überwiegend Thermoplaste) oder Elastomeren benutzt.

Bei der Sanierung von alten mit Bitumenbahnen abgedichteten Flächen (Flachdach, Ingenieurbau) können nicht-bitumenverträgliche Bahnen nicht direkt auf die zu sanierende Altbitumenabdichtung gelegt werden, da es zu Wechselwirkungen zwischen der Kunststoffbahn (oftmals PVC-P-NB) und dem Bitumen in der Art kommt, dass Weichmacher (Monomerweichmacher wie z. B. DINP, DIDP oder lineare Weichmacher) oder auch weitere flüssige Bestandteile, wie ESBO oder flüssige Thermostabilisatoren, in die Bitumenschicht wandern. Weiterhin kann auch die direkte Verlegung auf EPS (expandiertes Polystyrol), welches zur Isolierung eingesetzt wird, nicht möglich sein, da auch hier Wechselwirkungen zwischen der Dachbahn und der Isolierung möglich sind im Sinne der Wanderung und Migration flüchtiger oder flüssiger Bestandteile (wie z.B. Weichmacher).

Durch die Migration des Weichmachers versprödet die Dachbahn, sie verliert ihre Flexibilität, ihre Dimensionsstabilität, d. h. sie schrumpft sehr stark aufgrund des Massenverlusts und wird sehr stark empfindlich auf mechanische Belastungen (Literaturverweis: Weichmacherverlust, Bauschäden in Folge Änderung mechanischer Eigenschaften von PVC-Dachbahnen DDH 4/87 ab Seite 34: Kurzbericht einer Forschungsarbeit (Juni 1986), ausgeführt in der Bundesanstalt für Materialprüfung, Berlin).

Aus architektonischen Gründen und um die Aufheizung der Dachfläche möglichst gering zu halten, sind in den letzten Jahren vermehrt hellfarbene Bahnen im Einsatz.

Auch wenn diese Bahnen nach DIN EN 1548 als bitumenverträglich eingestuft wurden, kommt es beim Kontakt mit Bitumen zu Verfärbungen der Oberfläche.

Diese Verfärbungen sind auf Bitumenöle (Fluxöle) bzw. andere Inhaltsstoffe zurückzuführen, die durch die Kunststoffbahn auf die Oberfläche wandern und insbesondere das Fügeverhalten und das Alterungsverhalten verschlechtern können.

Durch eine Arbeit von L. Glück aus dem Jahr 2003 "Einwirkung von Bitumen auf Kunststoff - Dach - und Dichtungsbahnen" wurde gezeigt, dass polymerweichgemachte PVC-p-Bahnen sehr beständig sind, in der Praxis aber eine Verfärbung auftritt. Weitere Bahnen auf der Basis EVA, CPE und FPO zeigen im Kontakt mit Bitumen eine Besonderheit und hier insbesondere die Bahnen auf der Basis von FPO. Diese Bahnen nehmen sehr stark die Bitumenöle auf, geben sie aber auch nach Rekonditionierung nicht wieder ab. Durch die hohe Aufnahme der Öle werden die mechanischen Werte beeinflusst. Es kommt zu einem Anquellen. Es ist davon auszugehen, dass die Dauerhaftigkeit in Mitleidenschaft gezogen wird.

Seit 1991 sind Kunststoffdach- und dichtungsbahnen mit Selbstklebeschicht (basierend auf PVC-P) auf dem Markt. Als Kaltselbstklebeschicht wird heute durchaus noch ein Bitumen-Kautschuk-Harz-Compound verwendet, jedoch gibt es auch auf anderen Materialien basierende Selbstklebeschichten, z.B. acrylatbasiert, auf Kautschukbasis oder Synthesekautschukbasis wie SBR oder auch Styrol Copolymere wie SBS, SIS, SEBS oder SEPS oder Butylkautschuk (auch als Isobuten-Isopren-Kautschuk oder als Kurzzeichen IIR bekannt) möglich. Monomer weichgemachte und daher nicht migrationsstabile Formulierungen auf der Basis von PVC-p können nicht in direkten Kontakt mit der Kaltselbstklebeschicht kommen, da es zu vorgenannten Wechselwirkungen kommt. Polymer weichgemachte Bahnen besitzen aufgrund der längerkettigen Weichmacher eine geringere Flüchtigkeit, jedoch können durch Alterung, speziell durch Hydrolyse, die Weichmacher in kurzkettige Elemente aufgespalten werden.

Hellfarbene bitumenverträgliche Bahnen können ebenso nicht mit einer solchen Masse kaltselbstklebend ausgerüstet werden, da es zu den o. g. Verfärbungen bzw. weiteren Wechselwirkungen kommt (bei FPO-Bahnen starke Massenzunahme durch Aufnahme der Bitumenöle).

Um die dunkle bzw. schwarze Farbe von Bitumenbahnen als Sichtfläche zu vermeiden, ist es bekannt, entsprechende Bahnen mit einer Licht- und UV-Strahlen undurchlässigen Abdeckschicht zu versehen, die farbig ausgebildet ist (DE-A-44 03 101). Allerdings hat sich gezeigt, dass die im Bitumen enthaltenen Öle an die Oberfläche der Deckschicht migrieren, so dass eine Fleckenbildung auftritt.

Eine Mehrschichtbahn ist der EP-A-1 500 493 zu entnehmen. Um die Migration zu unterbinden, ist vorgesehen, dass die Mehrschichtbahn eine nichtmetallische Sperrschicht aufweist, die zwischen einer äußeren Polymerschicht und einer Bitumenschicht verläuft. Dabei kann die nichtmetallische Sperrschicht basierend auf Polymeren ausgewählt aus der Gruppe Polyamid, Ethylenvinylalkohol, Polyester und/oder Gemischen dieser bestehen. Des Weiteren können in einer Schicht Verstärkungsmaterialien vorhanden sein. Bei den Verstärkungsmaterialien kann es sich um Vliese, Gelege, Gewebe und/oder um Kombinationen dieser handeln.

Der DE-A-103 34 714 ist eine Dachbahn zu entnehmen, die gebäudeseitig eine Faserschicht aufweist, die mit einer Metallisierung versehen ist, um eine Abschirmung gegen elektromagnetische Strahlung zu bieten.

Die DE-A-35 03 809 bezieht sich auf eine Dichtungsbahn, die eine imprägnierte Faserschicht aufweist, um entsprechende Dichtungsbahnen homogen verschweißen zu können.

Eine Folie mit einer dampfdichten und flüssigkeitsundurchlässigen Zwischenschicht ist aus der EP-A-0 704 297 bekannt, um zu vermeiden, dass Öle aus einer Bitumenbahn an die Oberfläche dringen, wodurch sich andernfalls eine unerwünschte Verfärbung ergäbe.

Eine mehrschichtige Dachbahn ist aus der GB-A-2 138 357 bekannt. Eine dieser Schichten kann ein Vlies sein.

Eine aus VLDPE bestehende Zwischenschicht, die Polyvenylfluorid enthalten kann, findet sich in einer mehrschichtigen Bahn nach der US-B-6,194,049. Die entsprechende Zwischenschicht ist dampfundurchlässig.

Auch eine Mehrschichtbahn nach der US-A-4,442,148 umfasst eine dampfdichte Sperrschicht, die nicht zwingend eine Zwischenschicht sein muss.

Dampfdichte Schichten eines Folien-Bitumen-Verbunds sind aus der EP-A-1 407 878 bekannt.

Eine Dachbahn nach der EP-A-1 741 551 weist eine erste Schicht zum Beispiel aus einem Polymer und eine zweite Schicht auf, die gegenüber Bitumen migrationshemmend und eine imprägnierte Fluorkunststoffschicht ist, die mit einem Vlieskunststoff als migrationshemmendes Mittel imprägniert ist.

Der EP 1 444 158 A1 ist eine selbstklebende Dachabdichtungsbahn zu entnehmen, die einen monomeren Weichmacher enthält.

Aus der EP 1 500 493 A ist eine farbig-kaschierte Bitumenbahn bekannt, die eine farb- und witterungsbeständige verschweißbare Farbpolymerschicht, eine zum Beispiel aus Polyamid bestehende nicht-metallische Sperrschicht und eine Bitumenschicht aufweist.

Gegenstand der WO 2011/069680 A1 ist eine Mehrschichtfolie, die als Dachabdeckung zum Einsatz gelangen kann. Eine der Schichten dient als Barriereschicht.

Der vorliegenden Erfindung liegt die Aufgabe zugrunde, eine Bauwerksabdichtbahn zur Verfügung zu stellen, bei der eine Interaktion zwischen den angrenzenden Flächen, insbesondere zwischen den Materialien einer abzudeckenden Fläche, wie eines Daches, und einer Abdichtungsbahn, wie Dachbahn, unterbleibt. Insbesondere soll unterbunden werden, dass Weichmacher in die abzudeckende Fläche und/oder Bitumen aus der Fläche migriert.

Zur Lösung der Aufgabe wird vorgeschlagen eine Bauwerksabdichtbahn, umfassend eine bauwerkfernliegende Dichtungsbahn, eine angrenzende bauwerkseitig verlaufende Barriereschicht auf Basis von Mischungen von Homopolyamiden und/oder Copolyamiden sowie eine Selbstklebeschicht, die dadurch gekennzeichnet ist, dass die Barriereschicht aus zumindest zwei Schichten besteht, von denen eine Copolyamid enthaltende Heißklebstoffschicht eine erste Schicht und eine Homopolyamid enthaltende weitere Schicht eine zweite Schicht ist.

Vorzugsweise basiert die Dichtungsbahn auf PVC-P (Weich-PVC).

Hervorzuheben ist, dass die Dichtungsbahn auf PVC-P (Weich-PVC), enthaltend einen polymeren Weichmacher basiert.

Insbesondere besteht die Barriereschicht auf Basis aliphatischer Homopolyamiden, Copolymeren daraus oder Mischungen dieser bzw. enthält diese.

Besonders hervorzuheben ist, dass die Barriereschicht aus zumindest zwei Schichten besteht, von denen eine Copolyamid enthaltende Heißklebstoffschicht eine erste Schicht und eine Homopolyamid enthaltende weitere Schicht eine zweite Schicht ist. Dabei ist insbesondere eine Folie Ausgangsprodukt der Heißklebstoffschicht (auch Schmelzklebstoffschicht genannt).

Des Weiteren besteht die Möglichkeit, dass die Homopolyamid enthaltende zweite Schicht mehrschichtig ausgebildet ist und zumindest eine Schicht auf Basis von Polyolefinen aufweist, wie Polypropylen oder Polyethylen, oder deren Monomeren.

Die Copolyamid enthaltende Heißklebstoffschicht stellt sicher, dass die Polyamid-basierte zweite Schicht mit der Dichtungsbahn problemlos verbunden werden kann.

Selbstverständlich wird die Erfindung nicht verlassen, wenn die Heißklebstoffschicht selbst mehrschichtig aufgebaut ist, wobei eine Schicht auf Basis von Polyolefinen aufgebaut ist, insbesondere Polyethylen oder Polypropylen enthält.

Insoweit können Schichtsysteme zum Einsatz gelangen, wie diese dem Stand der Technik zu entnehmen sind. Diesbezügliche Schichtsysteme werden üblicherweise angegeben wie PP (Polypropylen)/PA (Polyamid)/PP (Polyethylen), PE/PA/PE, PA/EVOH (EthylenVinylalkohol -Polymer), PA/EVOH/PE oder PA/EVOH/PP.

Der mehrschichtige Aufbau zeigt den Vorteil, dass die Dicke der Polyamid enthaltenden Schicht sehr gering sein kann, so dass aufgrund der zumindest einen weiteren Schicht insbesondere auf Polyolefinbasis die erforderliche Verarbeitbarkeit zur Herstellung der Bauwerksabdichtbahn gegeben ist.

Anzumerken ist des Weiteren, dass die erfindungsgemäße Bauwerksabdichtbahn sich insbesondere dadurch auszeichnet, dass abgesehen von der Dichtungsbahn ein Verstärkungsmaterial wie Vlies, Gelege, Gewebe und/oder Kombination dieser nicht vorhanden ist. Ein diesbezügliches Verstärkungsmaterial könnte ausschließlich in der Dichtungsbahn selbst vorhanden sein.

Die Erfindung sieht u.a. vor, dass die Bauwerksabdichtbahn aus einer unmittelbaren Schichtfolge von bauwerksfernliegender Dichtungsbahn, einer unmittelbar angrenzenden bauwerksseitig verlaufenden Barriereschicht auf Polyamid- bzw. Copolyamidbasis und unmittelbar angrenzender Selbstklebeschicht besteht.

Die Dichtungsbahn selbst kann ihrerseits mehrschichtig ausgebildet sein und auch eine Verstärkung wie Gelege, Vlies o.ä. aufweisen, wie dies aus dem Stand der Technik bekannt ist. Auf einer entsprechenden Dichtungsbahn wird sodann entsprechend der erfindungsgemäßen Lehre die Barriereschicht auf Homopolyamid- bzw. Copolyamidbasis, insbesondere Homo- und Copolyamidbasis, sowie an dieser angrenzend die Selbstklebeschicht aufgebracht.

Generell basieren die Copolyamide, auch TPA genannt, auf thermoplastischen Copolyamiden, einem oder mehreren der folgenden Rohstoffe: Lactame (z.B. Caprolactam, Laurinlactam), Aminocarbonsäuren (z.B. Aminoundecansäure), Diamine (z.B. Hexamethylendiamin), Dicarbonsäuren (z.B. Adipinsäure, Azelainsäure, Dodecandisäure) und Polyethylenglykolen (z.B. PEG 600). Durch Polykondensation der einzelnen oben genannten Monomeren entstehen die Copolyamide. Es entsteht eine Copolyamid-Polymerkette, welche eine statistische Verteilung der Monomere aufweist. Die Schmelztemperaturen der einzelnen Copolyamide werden durch Steuerung der einzelnen Monomere eingestellt.

Überraschenderweise hat sich gezeigt, dass dann, wenn die Barriereschicht auf Polyamidbasis, insbesondere aus einem oder mehreren Homopolyamiden und einem oder mehreren Copolyamiden besteht oder diese enthält, die nicht gewünschte Migration reduziert bzw. unterdrückt wird. Insbesondere wird die Migration von Bitumen in die Dichtungsbahn und die Migration der Weichmacher aus der Dichtungsbahn in die Selbstklebeschicht verhindert bzw. reduziert. Insbesondere zeigen Barriereschichten auf Homo- bzw. Copolyamidbasis erhebliche Vorteile gegenüber solchen, die auf Polyester oder thermoplastischem Polyurethan basieren. Dies haben Vergleichsversuche ergeben. So wurden folgende Proben verglichen:

Eine erste Gruppe (Gruppe A) bestand aus Abschnitten einer Bauwerksabdichtbahn, die der erfindungsgemäßen Lehre entsprachen. Als Dichtungsbahn wurde eine solche auf Weich-PVC-Basis benutzt. Auf der entsprechenden Dichtungsbahn wurde sodann eine Sperrschicht auf der Basis von Copolyamid aufgetragen. Diese wurde sodann von einem bitumenbasierten Klebstoff als Selbstklebeschicht abgedeckt.

Eine zweite Gruppe (Proben B) von Abschnitten einer Abdichtbahn wiesen anstelle der Sperrschicht auf Copolyamidbasis eine Sperrschicht auf Polyesterbasis auf. Dichtungsbahn und Selbstklebeschicht wurden in ihrer Zusammensetzung nicht geändert.

Dritte Proben (Proben C) einer Abdichtbahn enthielt als Sperrschicht thermoplastisches Polyurethan, wobei entsprechend den Proben A und B die Dichtungsbahn und die Selbstklebeschicht unverändert blieben.

Die Proben A, B und C wurden sodann vier Wochen in einem Heizofen bei 90 °C getestet. Als Ergebnis konnte festgestellt werden, dass die Proben B und C, also diejenigen, die Polyester bzw. thermoplastisches Polyurethan für die Barriereschichten verwendeten, eine Verflüssigung der Klebeschicht zeigten. Dies deutet darauf hin, dass eine Wechselwirkung zwischen den Weichmachern der Dichtungsbahn und der Selbstklebeschicht erfolgte. Eine Barrierefunktion war somit im eigentlichen Sinne nicht gegebenen. Demgegenüber wiesen die Proben A, die die Sperrschicht auf Polyamidbasis aufwiesen, eine entsprechende Verflüssigung der Selbstklebeschicht nicht auf.

Insbesondere kann die Barriereschicht

a) 10-95 Gew. % eines Copolyamids auf Basis einer Kombination aus äquimolaren Mengen Piperazin und einer $C_6$-$C_{20}$, ggf. aminosubstituierten Dicarbonsäure
b) 5-90 Gew. % eines Copolyamids, welches Polyethersequenzen enthält,
c) ggf. 5-50 Gw. % weitere Copolyamide sowie ggf. 0,5-15 Gew. % Additive enthalten oder daraus bestehen.

Es besteht auch die Möglichkeit, dass die Barriereschicht enthält oder besteht aus

- Thermoplastisches Compound enthaltend Copolyamid zu 70 - 99 %, bevorzugterweise 90 - 99 %
- Gleitmittel oder Antiblockmittel von 0 bis 30 %, bevorzugterweise von 2 bis 5 %
- Treibmittel von 0,2 bis 30 %, bevorzugterweise 0,2 bis 1,0 %.

Es besteht weiterhin die Möglichkeit, dass die Barriereschicht enthält oder besteht aus

- Polyamid zu 20 - 95 %, bevorzugterweise 65 - 95 %
- supramolekularem Polymer zu 5 bis 80 %, bevorzugterweise von 5 bis 35 %

Die Gew. % ergänzen sich zu 100 %.

Als supramolekulare Polymere werden Polymere bezeichnet, deren Bausteine nicht durch kovalente Bindungen sondern durch schwächere intramolekulare Bindungen - hierunter fallen Wasserstoffbrückenbindungen, Ionenbindungen, Van-der-Waals Kräfte oder auch hydrophobe Wechselwirkungen - aufgebaut sind. Im Vergleich zu kovalenten

**EP 3 697 614 B1**

Bindungen können intramolekulare Bindungen leichter aufgespalten werden — vor allem bei Einsatz von erhöhter Temperatur — und können sich jedoch ebenfalls wieder schnell zurückbilden — während des Abkühlens. In manch einem Fall werden diese Polymere ebenfalls als "selbstheilend" bezeichnet. Ein Nebeneffekt der schwachen Bindungen ist eine geringe Viskosität von Schmelzen supramolekularer Polymere welches eine Verarbeitung erleichtert.

Die supramolekularen Polymere werden bevorzugt erhalten durch eine Reaktion 1-(2-aminoethyl)-2-imidazolidone (UDETA) und einer Mischung bestehend aus:

- 51 bis 100% aus einer oder mehreren identischen oder unterschiedlichen Fettsäure dimeren und/oder einer oder mehreren identischen oder unterschiedlichen Fettsäure Trimeren
- und von 0 bis 49 % aus einem oder mehreren identischen oder unterschiedlichen Fettsäure monomeren.

Insbesondere zeichnet sich die Erfindung auch dadurch aus, dass das Polyamid eine Mischung verschiedener Polyamide ist, um gewünschte Eigenschaften einstellen zu können. Eine Mischung kann z.B. aus den Homopolyamiden PA6, PA6.6 und/oder PA12 bestehen.

Um eine gute Haftbarkeit zu der angrenzenden Dichtungsbahn zu erzielen, sollte eine entsprechende auf Basis von Homopolyamiden bestehende Schicht dichtungsbahnseitig mit der Heißklebstoffschicht abgedeckt sein, die auch als Hotmelt-Schicht zu bezeichnen ist. Die entsprechende Schicht sollte auf der Basis einer oder mehrerer Copolyamide aufgebaut sein.

Vorzugsweise ist vorgesehen, dass die Barriereschicht eine aufgeschmolzene Folie ist, die ihrerseits aus mehreren Schichten bzw. Folien bestehen kann.

Die Barriereschicht kann eine Dicke $D_B$ mit $5\,\mu m \leq D_B \leq 300\,\mu m$, insbesondere $25\,\mu m \leq D_B \leq 60\,\mu m$, aufweisen.

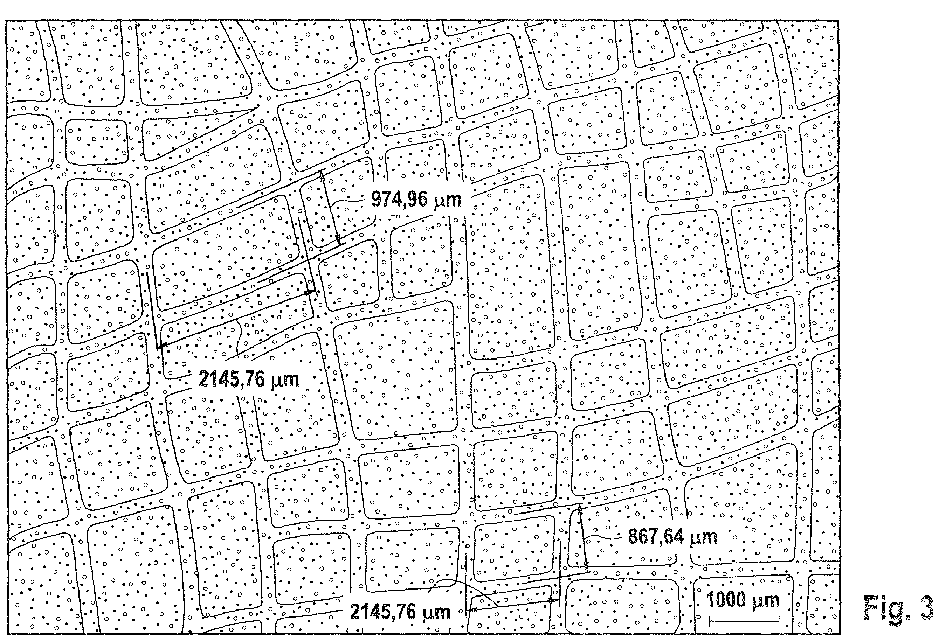

Bauwerksabdichtbahnen werden üblicherweise in Rollen angeliefert. Damit ein Trennen der aufeinanderliegenden Seiten beim Abrollen möglich ist, wird die Außenseite der Bauwerksabdichtbahnen, also die freie Außenfläche der Dichtungsbahn geprägt. Ohne eine Prägung würde das sogenannte "Blocken" oder "Blocking" auftreten, wodurch die Adhäsionskräfte die einzelnen aufeinanderliegenden Schichten der Rollenware zusammenhalten und ein Abrollen wiederum erschweren. Hierdurch erfährt die Oberfläche in im Wesentlichen regelmäßigem Verlauf punktuelle Vertiefungen, wie dies der Abbildung in der Fig. 3 zu entnehmen ist. Bei entsprechenden Prägungen hat sich bei einer erfindungsgemäßen Bauwerksabdichtbahn herausgestellt, dass bleibende Luftblasen zwischen der Barriereschicht und der Dichtungsbahn entstehen, wodurch ein Lösen der Barriereschicht erfolgen kann.

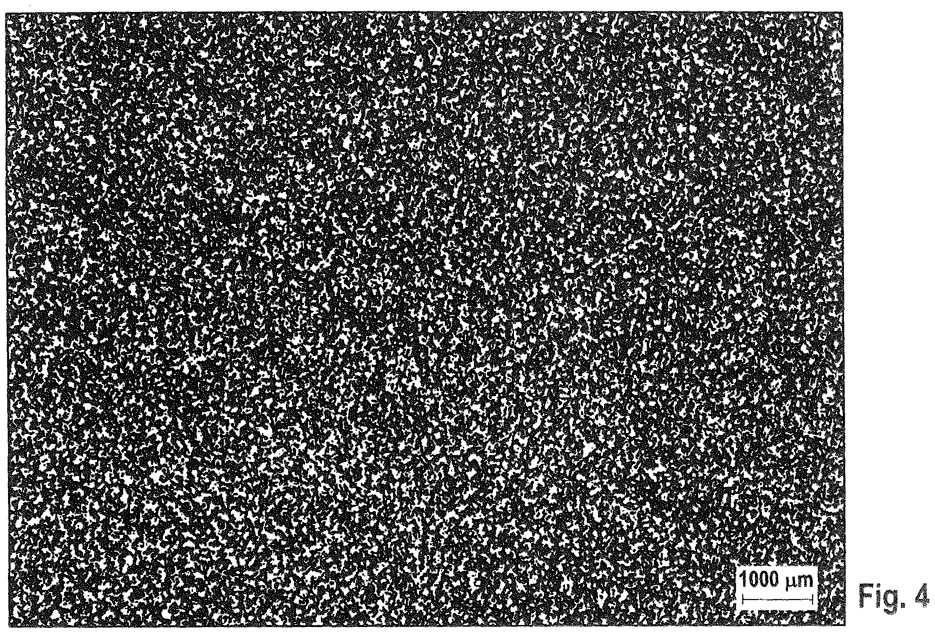

Erfindungsgemäß ist vorgesehen, dass die Oberfläche der Dichtungsbahn derart geprägt wird, dass sich eine von der Rauheit flachere Struktur ergibt wie diese der Abbildung gemäß Fig. 4 ersichtlich ist.

Zur Prägung wurde eine Prägewalze mit folgenden Rauheitswerten benutzt:

$$Lc = 2,5\ \mu m,\ Ra = 2,5 - 10\ \mu m,\ Rz = 20 - 50\ \mu m,\ Rmax = 25 - 65\ \mu m,$$

wobei Rmax = maximale Rauhtiefe, Ra = arithmetische Mittenrauhwert, Rz = gemittelte Rauhtiefe und Lc = Wellenlänge des Profilfilters sind.

Wie der Fig. 4 zu entnehmen ist, wird die Dichtungsbahn derart geprägt, dass sich eine zufällige Verteilung der Vertiefungen ergibt, da eine mikrostrukturierte Prägewalze zum Einsatz gelangte.

Vergleichsversuche haben gezeigt, dass durch die jeweilige Rauigkeit bei der erfindungsgemäßen Abdichtungsbahn eine Blasenbildung letztendlich unterbunden wird.

So wurden erfindungsgemäße Abdichtungsbahnen zum einen mit Prägungen nach dem Stand der Technik (Gruppe A) und Proben mit einer erfindungsgemäßen Prägung (Gruppe B) im Wasserdampf bei 70 °C über vier Wochen gelagert. Bei den Proben A konnte eine starke Blasenbildung festgestellt werden, die nach 24 Stunden nur geringfügig verschwand. Bereiche zwischen Barriereschicht und Dichtungsbahn waren getrennt.

Bei den Proben B konnte zwar auch eine - allerdings sehr geringe - Blasenbildung erkannt werden, die jedoch vollständig nach 24 Stunden verschwand.

Um sicherzustellen, dass zwischen der Barriereschicht und der Dichtungsbahn das Entstehen von Luftblasen ausgeschlossen wird, die zu einer Zerstörung der Barriereschicht führen können, ist daher vorgesehen, dass die bauwerkseitig verlaufende und mit der Barriereschicht verbundene Fläche der Dichtungsbahn eine maximale Rautiefe Rmax zwischen $10\,\mu m$ und $80\,\mu m$, eine gemittelte Rauhtiefe zwischen $10\,\mu m$ und $60\,\mu m$ und eine arithmetische Mittenrauwert zwischen $1,5\,\mu m$ und $12\,\mu m$ aufweist.

Die Prägung kann als genarbte Prägung oder Lederimitatprägung oder Kunstlederprägung bezeichnet werden.

Die Selbstklebeschicht sollte eine Dicke $D_S$ mit $0,5\ mm \leq D_S \leq 1,1mm$, insbesondere $0,7\ mm \leq D_S \leq 0,9\ mm$ aufweisen.

In Weiterbildung der Erfindung ist vorgesehen, dass die Dichtungsbahn aus zumindest einem Material aus der Gruppe PVC (Polyvinylchlorid), TPE (Thermoplastisches Elastomer), TPO (Thermoplastisches Elastomer auf Olefinba-

5

sis), TPV (Thermoplastisches Vulkanisat), EPDM (Ethylen-Propylen-Dien-Kautschuk), EVA (Ethylenvinylacetat), PP (Polypropylen), PE (Polyethylen), PA (Polyamid) besteht oder zumindest eines dieser Materialien enthält.

Insbesondere kann die Dichtungsbahn folgenden Aufbau aufweisen:

a) homogene Dichtungsbahn - d.h. eine Schicht, ohne Einlage/Verstärkung oder
b) zweischichtige Dichtungsbahn - Oberschicht, Einlage/Verstärkung, Unterschicht oder
c) mehrschichtiger Dichtungsbahn - Oberschicht/Unterschicht werden z.B. noch einmal separiert in zwei Schichten.

Bezüglich Einlage/Verstärkungen kommt Folgendes in Frage:

d) Polyester- oder glasbasierte Gewebe, Gelege, Vliese, Raschelwaren oder etwaige Kombinationen aus diesen,
e) Grammaturen vorzugsweise von 30 bis 130 g/m$^2$.

Auch können auf der Oberseite Lackierungen möglich sein mit z.B. einer Dicke von 4 $\mu$m bis 30 $\mu$m auf Acrylat-, Polyamid- oder Fluorbasis.

Insbesondere enthält die Dichtungsbahn ein Grundpolymer, einen polymeren Weichmacher auf Basis eines Adipinsäure- oder Sebacinsäurepolyesters mit einem mittleren Molekulargewicht von 3.000 bis 12.000 und/oder einen monomeren Weichmacher z.B. basierend auf Phthalsäureestern, und/oder ein Polyacrylat und/oder ein kautschukartiges Polymer, das sich bevorzugt aus (a) 40 bis 80, vorzugsweise 50 bis 80 und insbesondere 55 bis 75 Gew.-% Butylacrylat oder gegebenenfalls einer Mischung von Butylacrylat und 2-Ethylhexylacrylat enthaltend bis zu 40 Gew.-% 2-Ethylhexylacrylat, (b) von 5 bis 35, vorzugsweise von 5 bis 20 Gew.-% mindestens einer Substanz ausgewählt aus der Gruppe bestehend aus Methylmethacrylat, Ethylmethacrylat, Methylacrylat oder Ethylacrylat (c) von 4 bis 30 vorzugweise 6 bis 30, insbesondere 10 bis 25 Gew.-% Acrylnitril, (d) von 3 bis 25 vorzugsweise 5 bis 18, insbesondere 8 bis 14 Gew.-% Styrol, (e) von 0,5 bis 8, vorzugsweise 1 bis 5, insbesondere 2 bis 4 Gew.-% einer Maleathalbesterseife und von 0,25 bis 8, vorzugsweise 0,5 bis 4, insbesondere 1 bis 3 Gew. % eines Vernetzungsmittels zusammensetzt.

Unter Grundpolymer werden Polymere verstanden, die üblicherweise zur Herstellung von Dichtungsbahnen eingesetzt werden. Insbesondere werden Polyvinylchlorid (PVC) oder auch Polyvinylchloridcopolymere als Grundpolymere verwendet. Mischungen von diesen sind ebenfalls einsetzbar. Das Grundpolymer wird beispielsweise in Anteilen von 20 bis 60 Gew.-%, bevorzugt von 35 bis 55 Gew.-% eingesetzt. Sämtliche Angaben in Gew.-% beziehen sich hierbei auf die gesamte Zusammensetzung.

Der Adipinsäure- oder Sebacinsäurepolyester wird beispielsweise in Anteilen von 20 bis 45 Gew.-%, bevorzugt von 25 — 35 Gew.-% eingesetzt.

Ferner kann die Zusammensetzung zur Herstellung der Dichtungsbahn ein Polyacrylat enthalten. Als einsetzbare Polyacrylate kommen beispielsweise Ethyl-Butylacrylat, Butylacrylat, Copolymere aus Acrylsäure und Vinylchlorid, MMA oder PMMA in Frage. Die Polyacrylatkomponente trägt erheblich zur Verbesserung der Alterungs- und Witterungsbeständigkeit der Dichtungsbahnen bei und wird hauptsächlich bei zweischichtigen oder mehrschichtigen Systemen in den Oberschichten eingesetzt.

Von den oben genannten Polyacrylaten ist der Einsatz von Butylacrylat besonders bevorzugt.

In der Zusammensetzung kann das Polyacrylat in Form von mit PMMA oder MMA gecoateten Butylacrylat-Teilchen eingesetzt werden. Diese Butylacrylat-Teilchen haben vorzugsweise eine mittlere Teilchengröße von 100 $\mu$m oder weniger, ganz besonders bevorzugt liegt die mittlere Teilchengröße zwischen 5 und 40 $\mu$m.

Ein anderes Polyacrylat ist ein Copolymer aus Acrylsäure mit Vinylchlorid, insbesondere ein Pfropf-Copolymer aus diesen Verbindungen. Derartige Pfropf-Copolymere werden in bevorzugter Weise als Granulat mit einer Teilchengröße zwischen 0,25 und 5 mm, besonders bevorzugt zwischen 1 und 2 mm eingesetzt.

Die eingesetzten Polyacrylate haben ein mittleres Molekulargewicht von 5.000 bis 120.000, bevorzugt von 10.000 bis 100.000.

Die verwendeten Polyacrylate werden bei den Zusammensetzungen beispielsweise in Anteilen von 3 bis 30 Gew.-%, bevorzugt von 8 bis 25 Gew.-%, insbesondere 10 bis 20 Gew.-% eingesetzt. Dichtungsbahnen aus Zusammensetzungen mit solchen Anteilen an Polyacrylaten weisen eine besonders hohe Alterungsbeständigkeit auf und lassen sich auch sehr gut bei niedrigen Temperaturen verarbeiten.

Besonders bevorzugt ist der Einsatz des unter dem Handelsnamen Sunigum® von Omnova Solutions vertriebenen kautschukartigen Polymers. In den erfindungsgemäßen Dachbahnen kann das Polymer in Mengen von 1 bis 30, vorzugsweise 5 bis 20 und insbesondere 8 bis 15 Gew.-% eingesetzt werden.

Der Adipinsäurepolyester ist insbesondere aus Adipinsäure und 1,4-Butandiol aufgebaut.

Die Zusammensetzungen der Dichtungsbahnen können darüber hinaus weitere Zusätze wie Füllstoffe, Pigmente, Farbstoffe, UV-Stabilisatoren, Thermostabilisatoren, Fungizide, Biozide, Verarbeitungshilfen und zusätzliche Weichmacher enthalten. Diese zusätzlichen Weichmacher können bevorzugt niedermolekulare, monomere Weichmacher sein wie beispielsweise Phthalsäureester (Phthalate). Als Weichmacher können außerdem die üblichen aus dem Stand der Technik bekannten mit PVC verträglichen Weichmacher eingesetzt werden. Typische Weichmacher sind beispielsweise Derivate der Sylvinsäure oder Essigsäurederivate wie beispielsweise Cumylphenylacetat, Derivate der Adipinsäure wie Benzyloctyladipat, Dibutyladipat, Diisobutyladipat, Di-(2-ethylhexyl)adipat, Diisononyladipat, Derivate der Azelainsäure, Benzoesäurederivate, Polyphenylderivate, Zitronensäurederivate, epoxidierte Fettderivate sowie Glycolderivate. Weiterhin können auch biobasierte Weichmacher eingesetzt werden, d. h. Weichmacher, die (zumindest teilweise) nachwachsende Rohstoffe enthalten.

Bevorzugt enthält die Zusammensetzung jedoch weniger als 30 Gew.-% an zusätzlichen Weichmachern, besonders bevorzugt weniger als 15 Gew.-%.

Zur Erhöhung der Thermostabilität der Dichtungsbahnen können zusätzlich aus dem Stand der Technik bekannte Wärmestabilisatoren wie z. B. Ba/Zn-Stabilisatoren, vorzugsweise Ca/Zn-Stabilisatoren, enthalten sein. Daneben können auch zusätzlich noch UV-Stabilisatoren enthalten sein, wie beispielsweise Oxalanilide, Amide, Titandioxid, Ruß, insbesondere Tinuvin® und/oder Chimasorb® und/oder insbesondere NOR-HALS Stabilisatoren. Üblicherweise sind die Stabilisatoren jeweils in Mengen von 0,01 bis 10, vorzugsweise 0,1 bis 5 Gew.-% enthalten. Üblicherweise übersteigt die Gesamtmenge an Stabilisatoren nicht 20 Gew.-% der Mischung.

Als Füllstoffe kann die Dichtungsbahn die üblichen aus dem Stand der Technik bekannten Füllstoffe enthalten, wie beispielsweise Kreide, Talkum, Kieselsäuren oder Kaolin als Füllstoff. Die Menge an Füllstoffen beträgt 0 bis 15, bevorzugt 1 bis 10 Gew.-%.

Daneben können noch weitere übliche Inhaltsstoffe enthalten sein, wie beispielsweise Gleitmittel, Verarbeitungshilfsmittel, Gelierhilfen, UV-Wandler, UV-Stabilisatoren oder Biozide wie beispielsweise Thiazolinderivate, Tributylzinn, Chlorisothiazolin, besonders bevorzugt sind Isothiazolinderivate.

Die Dichtungsbahn kann darüber hinaus eine Faserverstärkung aufweisen. Diese Faserverstärkung kann in einem Vlies, einem Gelege und/oder einem Gewebe bestehen. Dabei kann die Faserverstärkung aus Fasern bestehen, die ausgewählt sind, aus Glas-, Mineral-, Polyester-, Polyamid-, Polyethylen-, Polypropylenfasern oder aus Mischungen von diesen.

Insbesondere weist die Dichtungsbahn eine innen liegende Einlage oder Verstärkung auf.

Die Selbstklebeschicht sollte aus zumindest einem Material aus der Gruppe Bitumen, Synthesekautschuke wie Butyl, Styrol Copolymere wie SBS, SBR (Styrol-Butadien-Rubber), Acrylatverbindungen, Silan-terminierte Polymere oder Polyolefine oder anderer geeigneter gute Hafteigenschaften aufweisender Klebstoff bestehen oder zumindest eines dieser Materialien enthalten.

Die erfindungsgemäße Bauwerksabdichtbahn führt zu einer deutlichen Verbesserung des Alterungsverhaltens der Dichtungsbahn, da kein direkter Kontakt zwischen dieser und dem Material der Fläche erfolgt, auf der die Bauwerksabdichtbahn aufgebracht ist. Eine Wechselwirkung wird ausgeschlossen. Auch wird eine Weichmacherwanderung von der Dichtungsbahn wie Dachbahn zu der abzudeckenden Fläche unterbunden.

Die Erfindung bezieht sich auch auf eine Verfahren zur Herstellung einer Bauwerksabdichtbahn, umfassend die Verfahrensschritte

- Herstellen einer Dichtungsbahn, wie Dachbahn,
- Fixieren einer Barriereschicht auf Polyamidbasis auf einer Seite der Dichtungsbahn,
- Auftragen einer schmelzflüssigen Selbstklebeschicht auf die Barriereschicht bei gleichzeitigem Schmelzen bzw. Aufschmelzen der Barriereschicht aufgrund des Wärmeeintrags der Selbstklebeschicht.

Die Barriereschicht ist dabei insbesondere eine Folie und kann bevorzugterweise mehrschichtig ausgebildet sein, wobei eine Schicht auf Basis von Homopolyamid und eine andere Schicht auf Basis von Copolyamid aufgebaut ist. Die Schicht auf Basis von Copolyamid ist dabei der Dichtungsbahn zugewandt.

Der Begriff Polyamidbasis ist entsprechend der erfindungsgemäßen Lehre als Homopolyamid- und/oder Copolyamidbasis zu verstehen, wobei insbesondere Mischungen von Homopolyamid und/oder Copolyamiden zum Einsatz gelangen.

Bezüglich der Homopolyamiden ist des Weiteren anzumerken, dass diese insbesondere aliphatische Homopolyamide sind.

Erfindungsgemäß wird quasi ein Zweistufenprozess durchgeführt, um die Abdichtbahn herzustellen. So wird in einem ersten Schritt die Dichtungsbahn selbst, insbesondere in einem Kalanderprozess hergestellt. Sodann wird die auf Polyamidbasis bestehende Barriereschicht in Form einer Folie, einer sogenannten Hotmelt-Folie aufgebracht, wobei ein Aufschmelzen nicht erfolgt, vielmehr ausschließlich eine Erwärmung in einem Umfang vorgenommen wird, dass ein Verrutschen der Barrierefolie gegenüber der Dichtungsbahn nicht erfolgen kann.

Um die Barriereschicht bzw. -folie zu erwärmen, können verschiedene Maßnahmen zur Anwendung gelangen. So kann z. B. über die Dichtungsbahn, auf die bei der Herstellung der Bauwerksabdichtbahn die Barriereschicht bzw. -folie aufgebracht wird, die erforderliche Wärme abgeben. Dies kann vom Untergrund her, auf der sich die Dichtungsbahn befindet, erfolgen. So kann z. B. die Dichtungsbahn mittels eines Transportbandes beim Auftragen der Barriereschichten bzw. -folie gefördert werden, wobei das Transportband im erforderlichen Umfang erwärmt bzw. erhitzt ist.

Da zum Fixieren der Barriereschicht bzw. -folie diese auf die Dichtungsbahn gedrückt wird, vorzugsweise über eine Andrückrolle, kann diese auf die gewünschte Temperatur erwärmt werden. Dies kann z. B. mittels Wasser, Wasserdampf oder Öl erfolgen.

Selbstverständlich besteht auch die Möglichkeit, Barriereschicht bzw. -folie und Dichtungsbahn mit Heißluft oder mit Infrarotstrahlern zu erwärmen, damit die Barriereschicht bzw. -folie auf der Dichtungsbahn fixiert wird.

Sodann wird die Selbstklebeschicht aufgetragen und aufgeschmolzen, wobei ein Erwärmen auf Temperaturen zwischen 120 °C und 180 °C erfolgen sollte. Durch den diesbezüglichen Wärmeeintrag wird gleichzeitig die Barrierefolie geschmolzen bzw. aufgeschmolzen, so dass die erforderliche Verbindung einerseits zu der Dichtungsbahn und andererseits zu der Selbstklebeschicht gewährleistet ist.

Durch die diesbezüglichen Verfahrensmaßnahmen erfolgen gegenüber dem Stand der Technik sowohl eine Energieeinsparung als auch Zeitersparnis.

Zum Fixieren der Hotmelt-Folie, also der Barrierefolie, erfolgt ein Erhitzen auf eine Temperatur vorzugsweise zwischen 60 °C und 80 °C.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von bevorzugten Ausführungsbeispielen.

Es zeigen:

Fig. 1         eine erste Ausführungsform einer erfindungsgemäßen Bauwerksabdichtbahn,
Fig. 2         eine zweite Ausführungsform einer solchen,
Fig. 3         eine Abbildung einer geprägten Dichtungsbahn nach dem Stand der Technik,
Fig. 4         eine Abbildung einer geprägten Dichtungsbahn nach der Erfindung,
Fig. 5         eine Ausführungsform einer Abdichtbahn mit einlagiger Dichtungsbahn,
Fig. 6         eine weitere Ausführungsform einer Abdichtbahn mit einer einlagigen Dichtungsbahn,
Fig. 7         eine Abdichtbahn mit einer zweilagigen Dichtungsbahn mit Einlage,
Fig. 8         eine Abdichtbahn mit einer dreischichtigen Dichtungsbahn mit Einlage,
Fig. 9 und 10  Prinzipdarstellungen des Herstellverfahrens von erfindungsgemäßen Abdichtbahnen und
Fig. 11        eine weitere Ausführungsform einer Abdichtungsbahn.

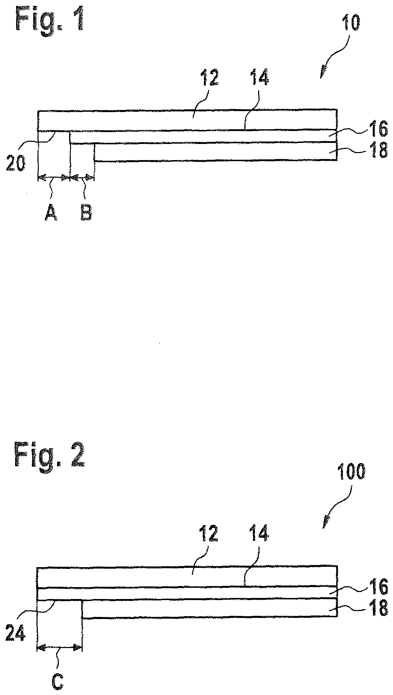

In den Fig. 1 und 2 ist rein prinzipiell und im Ausschnitt jeweils eine Bauwerksabdichtbahn 10, 100 dargestellt, wobei für gleiche Elemente gleiche Bezugzeichen verwendet werden.

Hauptanwendungsfall der Bauwerksabdichtbahn ist die Abdeckung von Dächern, wenngleich hierdurch eine Einschränkung der Erfindung nicht erfolgen soll. Auch das Abdichten von zum Beispiel Schwimmbädern, Terrassen oder Parkflächen sind als Anwendungsfall zu nennen.

Durch die erfindungsgemäße Bauwerksabdichtbahn soll das Migrieren von Bitumen, Fluxölen und/oder Weichmachern bzw. deren flüchtigen Bestandteile und/oder expandiertem Polystyrol verhindert bzw. gehemmt werden. Die Möglichkeit des Diffundierens von Wasserdampf bzw. Sauerstoff soll demgegenüber gegeben sein.

Die der Fig. 1 zu entnehmende Ausführungsform der Bauwerksabdichtbahn 10 besteht aus einer bauwerksfernliegenden Dichtungsbahn 12, bei der es sich um eine Dachbahn handeln kann, die insbesondere aus zumindest einem Material aus der Gruppe PVC (Polyvinylchlorid), TPE (Thermoplastisches Elastomer), TPO (Thermoplastisches Elastomer auf Olefinbasis), TPV (Thermoplastisches Vulkanisat), EPDM (Ethylen-Propylen-Dien-Kautschuk), EVA (Ethylenvinylacetat), PP (Polypropylen), PE (Polyethylen), PA (Polyamid) besteht oder zumindest eines dieser Materialien enthält.

Die Dichtungsbahn 12 kann aus mehreren Schichten bestehen, von denen zumindest eine auch eine Verstärkungsschicht z.B. aus Vlies, Glasgewebe etc. sein kann. Insoweit ist auf den Stand der Technik zu verweisen.

Auf die Unterseite, also der dem Bauwerk zugewandten Fläche 14 der Dichtungsbahn 12 wird eine Barriereschicht 16 aufgebracht. Hierzu wird insbesondere eine aufschmelzbare Folie, eine sogenannte Hotmelt-Folie benutzt. Unabhängig hiervon besteht die Barriereschicht 16 aus einem Polyamid, insbesondere Homo- und/oder Copolyamid oder einer Mischung dieser bzw. enthält diese.

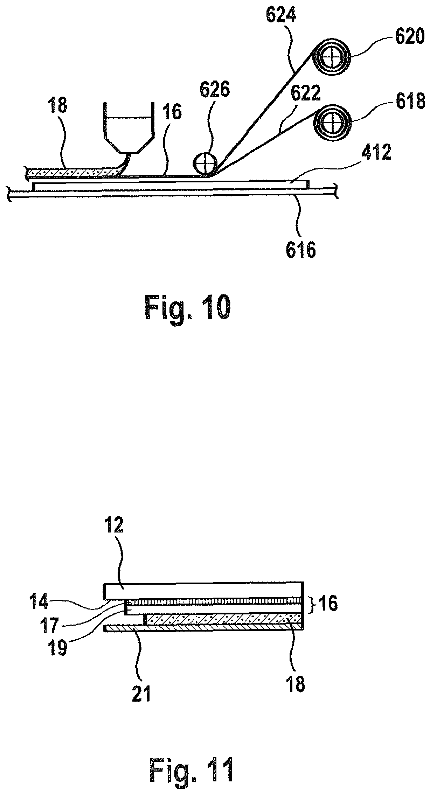

Insbesondere ist vorgesehen, dass die Barriereschicht 16, 17, 19 mehrschichtig ausgebildet ist, wie dies der Fig. 11 zu entnehmen ist. Dabei enthält die an der Dichtungsbahn 12 angrenzende Schicht 17 Copolyamid, insbesondere eine Mischung von Copolyamiden. Die angrenzende Schicht 19 basiert vorzugsweise auf Homopolyamid und kann Mischungen dieser enthalten. Insbesondere kommen als Homopolyamid PA6, PA6.6 und/oder PA12 in Frage.

Ganz allgemein sollte die Schicht 19 ein oder mehrere aliphatische Homopolyamide enthalten, um die gewünschte Barrierewirkung zu erzielen.

Unabhängig hiervon wird die auf die bauwerkseitig verlaufende Fläche 14 der Dichtungsbahn 12 aufzubringen Barriereschicht 16, sei diese ein- oder mehrschichtig ausgebildet, zunächst nicht aufgeschmolzen. Vielmehr wird die in Form einer Folie aufzubringende Barriereschicht 16 in einem Umfang erwärmt, dass eine Fixierung auf der Fläche 14 erfolgt, also nur ein Verrutschen beim nachfolgenden Auftragen einer Selbstklebeschicht 18 unterbunden ist.

Insbesondere ist vorgesehen, dass die Selbstklebeschicht 18 besteht oder enthält zumindest ein Material aus der Gruppe Bitumen, Butyl, SBS, SBR (Styrol-Butadien-Rubber), Acrylatverbindungen, Silan-terminierte Polymere oder Polyolefine oder anderer geeigneter gute Hafteigenschaften aufweisender Klebstoff.

Wird die ein- oder mehrschichtige die Barrierewirkung erzielende Folie, also die Barriereschicht 16 vorzugsweise bei einer Temperatur zwischen 60 °C und 80 °C erwärmt, um die gewünschte Fixierung auf der Unterseite 14 der Dichtungsbahn 12 zu ermöglichen, weist die im schmelzflüssigen Zustand aufgetragene Selbstklebeschicht 18 eine Temperatur von insbesondere 120 °C bis 180 °C auf. Der Wärmeeintrag der Selbstklebeschicht 18 reicht aus, um gleichzeitig die Barriereschicht 16 in einem Umfang zu schmelzen bzw. aufzuschmelzen, dass die erforderliche Verbindung einerseits zu der Dichtungsbahn 12 und andererseits zu der Selbstklebeschicht 18 gewährleistet ist.

Mit anderen Worten reicht die zum Fixieren der Barriereschicht 16 benötigte Temperatur nicht aus, um ein Lösen von der Dichtungsbahn 12 zu verhindern. Erst durch den Wärmeeintrag über die auf die Barriereschicht 16 aufgetragene Selbstklebeschicht 18 erfolgt eine Verbindung zwischen zum einen der Barriereschicht 16 und der Dichtungsbahn 12 und zum anderen zur Selbstklebeschicht 18 in einem Umfang, dass ein Lösen unterbleibt. Dies wurde auch durch Klimawechseltests bestätigt.

So wurden Proben A hergestellt, die aus einem Abschnitt einer Dichtungsbahn basierend auf Weich-PVC bestehen. Auf diese wurde eine erfindungsgemäße Barriereschicht aufgetragen. Dabei wirkte auf die Hotmelt-Barriereschicht eine Temperatur von 70 °C ein, wodurch ein Fixieren auf der Barriereschicht erfolgte.

Ferner wurden Proben B hergestellt, bei denen entsprechend der Proben A auf eine Dichtungsbahn gleicher Zusammensetzung zunächst die Barriereschicht aufgebracht und bei einer Temperatur von 70 °C fixiert wurde, um anschließend auf die Hotmelt-Barriereschicht eine Selbstklebeschicht mit bzw. bei einer Temperatur 140 °C aufzutragen.

Anschließend wurden mit den Proben A und B Klimawechseltests durchgeführt, und zwar 100 Zyklen nach ASTM E 1171. Die Proben wurden einer Temperatur von 85 °C und einer Luftfeuchtigkeit von 85 % über 20 Stunden ausgesetzt. Sodann erfolgte eine Abkühlung auf -40 °C, um anschließend die Proben wieder auf 85 °C zu erhitzen. Während des Abkühlens waren die Proben Normalluft ausgesetzt. Das Abkühlen von der Temperatur 85°C auf -40 °C und Erwärmen auf 85°C dauerte ca. vier Stunden, wobei die Proben bei der Temperatur von -40 °C über eine halbe Stunde gehalten wurden.

Sodann wurde bei den Proben B die Selbstklebeschicht entfernt. Anschließend wurde versucht die Barriereschicht von der Dichtungsbahn abzulösen. Dies war nicht möglich. Demgegenüber konnte bei den Proben A die Barriereschicht gelöst werden bzw. lag bereits losgelöst auf der Oberfläche der Dichtungsbahn, da die zum Fixieren der Barriereschicht auf der Dichtungsbahn applizierte Temperatur offensichtlich nicht ausreichte, die erforderliche Verbindung zwischen Barriereschicht und Dichtungsbahn zu bewirken.

Weiterhin kann die Selbstklebeschicht 18 auch als eine Schweißmasse basierend auf Bitumen ausgebildet sein. D.h. durch Hitzeeinwirkung eines Brenners wird die Schweißmasse aktiviert und kann so auf dem Untergund appliziert werden.

Wie sich aus der zeichnerischen Darstellung ergibt, verläuft die Barriereschicht 16 beabstandet zum linken Rand der Dichtungsbahn 12. Ein Abstand A zwischen 5 cm und 6 cm kann eingehalten werden.

Beabstandet zum linken Rand der Barriereschicht 16 verläuft wiederum die Selbstklebeschicht 18, wobei der Abstand B 1 cm bis 2 cm betragen kann.

Ungeachtet des Abstandes der Barriereschicht 16 von dem linken Rand der Dichtungsbahn 12 wird sichergestellt, dass eine Migration verhindert wird; denn der unbedeckte Randbereich 20, der einen Schweißrand bildet, wird auf eine benachbarte Abdichtbahn gelegt, um mit dieser verschweißt zu werden. Da im Ausführungsbeispiel die Dichtungsbahn 12, die Barriereschicht 16 und die Selbstklebeschicht 18 rechts randseitig bündig zueinander verlaufen, ist folglich das Bauwerk gegenüber der Dichtungsbahn 12 vollständig über die Barriereschicht 16 abgeschirmt.

Der Abstand B stellt quasi einen Sicherheitsabstand dar, damit die Selbstklebeschicht 18 nicht unmittelbar mit der Dichtungsbahn 12 kontaktiert werden kann.

Bei dem Ausführungsbeispiel der Fig. 2 erstreckt sich die Barriereschicht 16 vollflächig über die gesamte Unterseite, also Fläche 14, der Dichtungsbahn 12. Die Selbstklebeschicht 18 verläuft demgegenüber beabstandet zum linken Rand der Dichtungsbahn 12 und damit der Barriereschicht 16. Dieser von der Selbstklebeschicht 18 unbedeckte Bereich der Bauwerksabdichtbahn ist der Schweißrand 20 , der mit einer benachbarten Abdichtbahn verschweißt wird.

Durch das Verschweißen wird dabei gleichzeitig sichergestellt, dass der nicht von der Selbstklebeschicht 18 abgedeckte Randstreifen der Barriereschicht 16 im erforderlichen Umfang aufschmilzt, um mit der Unterseite, also der Fläche 14, der Dichtungsbahn 12 verbunden zu werden. Der Abstand C zwischen dem linken Rand der Dichtungsbahn 12 und dem linken Rand der Selbstklebeschicht 18 kann 5 cm bis 6 cm betragen.

Durch die erfindungsgemäßen Maßnahmen erfolgt ein vollflächiger Schutz über das komplette Bauwerk, das abgedichtet werden soll.

Wie die Fig. 11 rein prinzipiell verdeutlicht, kann die Selbstklebeschicht 18 außenseitig von einer abziehbaren Schutzfolie 21 oder einen Schutzliner abgedeckt sein.

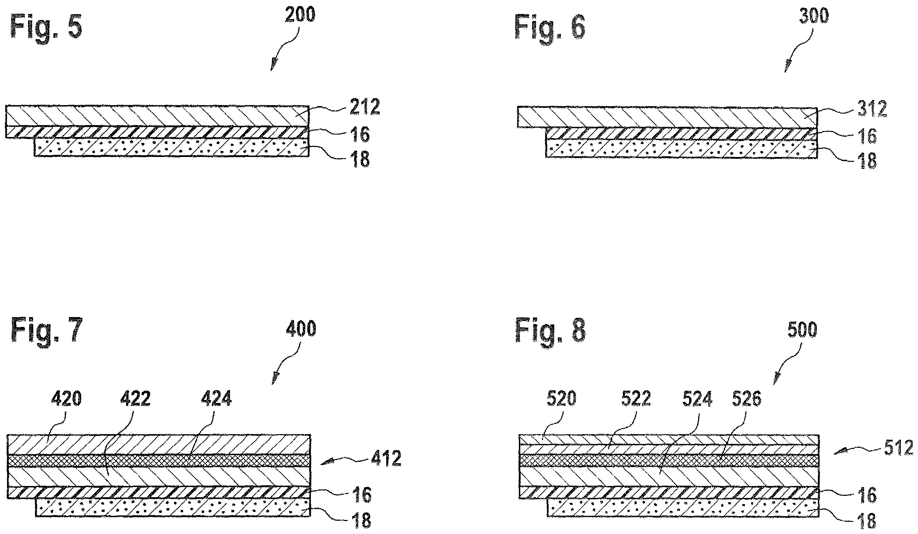

Den Fig. 5 bis 8 sind Prinzipdarstellungen von Bauwerksabdichtbahnen 200, 300, 400, 500 zu entnehmen, die sich sämtlichst dadurch auszeichnen, dass entlang den Unterseiten der Dichtungsbahnen 212, 312, 412, 512, also den einem abzudichtenden Bauwerk zugewandten Seiten eine Barriereschicht 16 verläuft, die aus Polyamid, Copolyamid oder Mischungen daraus besteht.

Die Abdichtbahnen 200, 300 der Fig. 5 und 6 weisen einschichtige Dichtungsbahnen 212, 312 auf. Entlang der Unterseite der Dichtungsbahn 212 erstreckt sich ganzflächig die Barriereschicht 16. Vom linken Rand beabstandet geht die sich entlang der Außenseite der Barriereschicht 16 verlaufende Selbstklebeschicht 18 aus, um einen Schweißrand zur Verfügung zu stellen. Dieser findet sich auch bei der Abdichtbahn 300, wobei entsprechend der Erstreckung der Selbstklebeschicht 18 die Barriereschicht 16 verläuft. Die Dichtungsbahn 312 ist gleichfalls einlagig.

Bei der Fig. 7 weist die Dichtungsbahn 412 einen zweischichtigen Aufbau (Schichten 420, 422) auf, zwischen denen eine Verstärkung bzw. Einlage 424 verläuft, die z.B. als Glasvlies, Gewebe o.ä. ausgebildet sein kann. Entlang der Unterseite der Schicht 422 erstreckt sich die Barriereschicht 16, die unter Bildung eines Schweißrandes von der Selbstklebeschicht 18 abgedeckt ist.

Nach dem Ausführungsbeispiel der Fig. 8 besteht die Dichtungsbahn 512 aus drei Schichten 520, 522, 524, wobei zwischen den Schichten 522, 524 eine Verstärkung 526 verläuft. Die Erstreckung der Barriereschicht 16 und der Selbstklebeschicht 18 entspricht der der Fig. 7.

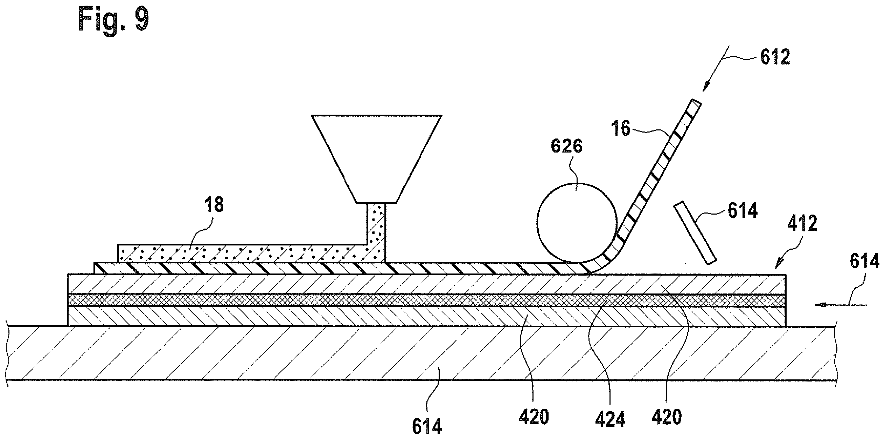

Der Fig. 9 ist ein schematischer Ablauf zur Herstellung einer erfindungsgemäßen Bauwerksabdichtbahn zu entnehmen. Dabei geben die Pfeile 612 bzw. 614 die Förder- bzw. Transportrichtung an.

Auf einem Transportband 616 ist eine zweischichtige Dichtungsbahn 412 angeordnet, wie diese der Fig. 7 zu entnehmen ist. Die Dichtungsbahn 412 besteht somit aus einer Schicht 420, die unmittelbar auf dem Transportband 616 aufliegt, der angrenzenden Einlage 424, z.B. in Form eines Gewebes, und der Schicht 422, die bei der fertigen Abdichtbahn 400 einem abzudichtenden Bauwerk zugewandt ist. Die Schicht 420 ist somit bei der fertigen Abdichtbahn die Außenschicht, die gegebenenfalls lackiert werden kann.

Von einer nicht dargestellten Rolle wird eine Hotmelt-Folie, die die Barriereschicht 16 bildet, abgezogen und auf die Außenseite der Schicht 422 aufgebracht. Dabei erfolgt ein Fixieren bei einer Temperatur von ca. 70 °C. Diese Temperatur wird mittels z.B. eines Infrarotstrahlers 615 vor Aufbringen der Hotmelt-Folie in der Oberfläche der Schicht 422 erzeugt, so dass die aufgetragene Hotmelt-Folie fixiert wird. Hierzu kann die Hotmelt-Folie mittels einer Umlaufrolle 626 zusätzlich auf die Schicht 422 gedrückt werden.

Alternativ oder ergänzend besteht auch die Möglichkeit, dass das Transportband im erforderlichen Umfang erwärmt wird, damit in die Barrierefolie 16 ein Wärmeeintrag erfolgt, der ein Fixieren auf der Oberfläche der Dichtungsbahn sicherstellt. Auch kann die Andrückrolle 626 z. B. mittels Wasser, Wasserdampf oder Öl auf eine gewünschte Temperatur erwärmt werden, damit die Barriereschicht 16 auf der Dichtungsbahn 412 fixiert werden kann.

Beabstandet zu der Rolle 626 wird ein Klebstoff in Schichtform aufgetragen und mittels Rakel in konstanter Schichtdicke verteilt, um die Selbstklebeschicht 18 zu bilden. Dabei kann der Klebstoff bereits die notwendige Temperatur im Bereich zwischen 120°C und 180 °C aufweisen, durch die sichergestellt ist, dass die erforderliche Verbindung sowohl zwischen der Hotmelt-Folie und der Schicht 422 als auch zwischen dem die Selbstklebeschicht 18 bildenden Klebstoff und der Hotmelt-Folie erfolgt.

Das Transportband 616 kann nach Auftragen des Klebstoffs gekühlt werden, um sodann die abgekühlte Bauwerksabdichtbahn z.B. auf eine Rolle aufzuwickeln oder im gewünschten Umfang abzulängen.

Die Außenseite der transportbandseitig verlaufenden Schicht 420 der Dichtungsbahn 412 weist die erforderliche Narbung bzw. Prägung auf, wie dies zum Beispiel der Fig. 4 zu entnehmen ist, um bei aufgewickelter Bauwerksabdichtbahn ein Abwickeln problemlos zu ermöglichen.

Eine entsprechende Prägung befindet sich auch auf der der Barriereschicht 16 zugewandten Seite der Dichtungsbahn 412, um eine Blasenbildung zwischen der Dichtungsbahn 412 und der Barriereschicht 16 in einem Umfang zu unterbinden, dass ein Lösen unterbleibt.

Anhand der Fig. 10 soll gleichfalls in Prinzipdarstellung das Herstellungsverfahren der Bauwerksabdichtbahn entsprechend der Fig. 11 verdeutlicht werden, wobei Bezugszeichen verwendet werden, die der Fig. 9 zu entnehmen sind.

So wird zunächst auf dem Transportband 616 die Dichtungsbahn 412 angeordnet, die insbesondere mehrschichtig ausgebildet sein und eine Verstärkungseinlage aufweisen kann.

Von Wickeln 618, 620 werden Folien 622, 624 abgezogen, die mittels einer Andrückrolle 626 auf die Dichtungsbahn 412 aufgedrückt werden, um sodann mittels einer nicht dargestellten Wärmequelle auf der Oberfläche der Dichtungsbahn 412 fixiert zu werden.

Die Folien 622, 624 bilden die Barriereschicht 16. Dabei basiert die unmittelbar auf der Dichtungsbahn 412 aufliegende Folie 622 auf Copolyamid, insbesondere Mischungen von Copolyamiden, um die erforderliche Haftung sicherzustellen. Insbesondere handelt es sich bei der Folie 622 um eine Heißklebstoff- oder Hotmelt-Folie. Auch kann die Folie 622 selbst mehrschichtig aufgebaut sein und ein oder mehrere Schichten aufweisen, von denen eine oder einige Polyolefin-basiert sind.

Die Folie 624 basiert auf Homopolyamid und weist insbesondere Mischungen von Homopolyamiden, insbesondere aliphatische Homopolyamide, auf. Insbesondere kommen als Homopolyamide PA6, PA6.6 und/oder PA12 in Frage.

Entsprechend den Erläuterungen zu der Fig. 9 wird sodann auf die freie Oberfläche der Sperrschicht 16, also der Folie 624, die Selbstklebeschicht 18 aufgetragen, die in einem Umfang erhitzt ist, dass auch die Folien 622, 624 aufschmelzen, so dass die erforderliche Verbindung zwischen der Dichtungsbahn 412, den Folien 622, 624 und der Selbstklebeschicht 18 erfolgt. Die Selbstklebeschicht 18 wird im schmelzflüssigen Zustand aufgetragen.

Zu der auf Polyamidbasis bestehenden Folie 624 ist anzumerken, dass diese gleichfalls mehrschichtig ausgebildet sein kann, insbesondere ein oder mehrere Schichten auf Polyolefinbasis aufweisen kann.

In den Folien 622, 624 sind genügend Bestandteile enthalten, um die erforderliche Haftung untereinander und zu den angrenzenden Schichten, d.h. der Dichtungsbahn 412 bzw. der Schmelzklebeschicht 18, sicherzustellen.

**Patentansprüche**

1. Bauwerksabdichtbahn (10, 100), umfassend eine bauwerkfernliegende Dichtungsbahn (12), eine angrenzende bauwerkseitig verlaufende Barriereschicht (16) auf Basis von Mischungen von Homopolyamiden und/oder Copolyamiden sowie eine Selbstklebeschicht (18),
**dadurch gekennzeichnet,**
**dass** die Barriereschicht (16) aus zumindest zwei Schichten besteht, von denen eine Copolyamid enthaltende Heißklebstoffschicht (17) eine erste Schicht und eine Homopolyamid enthaltende weitere Schicht (19) eine zweite Schicht ist.

2. Bauwerksabdichtbahn nach Anspruch 1,
**dadurch gekennzeichnet,**
**dass** die Dichtungsbahn (12) auf PVC-P (Weich-PVC) basiert, gegebenenfalls enthaltend einen polymeren Weichmacher.

3. Bauwerksabdichtbahn nach Anspruch 1,
**dadurch gekennzeichnet,**
**dass** die Barriereschicht (16) auf Basis aliphatischer Polyamiden, Copolymeren aus diesen oder Mischungen dieser besteht, und gegebenenfalls PA6, PA6.6 und/oder PA12 enthält.

4. Bauwerksabdichtbahn nach Anspruch 1,
**dadurch gekennzeichnet,**
**dass** die Homopolyamid enthaltende zweite Schicht (19) mehrschichtig ausgebildet ist und zumindest eine Schicht auf Basis von Polyolefinen aufweist, und/oder dass die dichtungsbahnseitig verlaufende erste Schicht (17) mehrschichtig ausgebildet ist und zumindest eine Schicht auf Basis von Polyolefinen aufweist.

5. Bauwerksabdichtbahn nach zumindest einem der vorhergehenden Ansprüche,
**dadurch gekennzeichnet,**
**dass** die Barriereschicht (16) enthält oder besteht aus

a) 10-95 Gew. % eines Copolyamids auf Basis einer Kombination aus äquimolaren Mengen Piperazin und einer C6-C20, ggf. aminosubstituierten Dicarbonsäure
b) 5-90 Gew. % eines Copolyamids, welches Polyethersequenzen enthält,
c) ggf. 5-50 Gw. % weitere Copolyamide sowie ggf. 0,5-15 Gew. % Additive.

6. Bauwerksabdichtbahn nach zumindest einem der vorhergehenden Ansprüche,
**dadurch gekennzeichnet,**
**dass** die Barriereschicht (16) besteht aus oder enthält

- Thermoplastisches Compound enthaltend Copolyamid zu 70 - 99 %, bevorzugterweise 90 - 99 %
- Gleitmittel oder Antiblockmittel von 0 bis 30 %, bevorzugterweise von 2 bis 5 %
- Treibmittel von 0,2 bis 30 %, bevorzugterweise 0,2 bis 1,0 %.

7. Bauwerksabdichtbahn nach zumindest einem der vorhergehenden Ansprüche,
**dadurch gekennzeichnet,**

**dass** die Barriereschicht (16) eine aufgeschmolzene Folie ist.

8. Bauwerksabdichtbahn nach zumindest einem der vorhergehenden Ansprüche,
**dadurch gekennzeichnet,**
**dass** die bauwerkseitig verlaufende mit der Barriereschicht (16) verbindende Fläche (14) der Dichtungsbahn (12) eine Rauheit aufweist mit Ra = 2,5 - 10 $\mu$m und/oder Rz = 20 - 50 $\mu$m und/oder Rmax = 25 - 65 $\mu$m, wobei Rmax = maximale Rauhtiefe, Ra = arithmetische Mittenrauhwert, Rz = gemittelte Rauhtiefe sind.

9. Bauwerksabdichtbahn nach zumindest einem der vorhergehenden Ansprüche,
**dadurch gekennzeichnet,**
**dass** die Barriereschicht (16) eine Dicke $D_B$ mit 5 $\mu$m $\leq D_B \leq$ 300 $\mu$m, insbesondere 25 $\mu$m $\leq D_B \leq$ 60 $\mu$m, aufweist, und/oder dass die Selbstklebeschicht (18) eine Dicke $D_s$ mit 0,5 mm $\leq Ds \leq$ 1,1 mm, insbesondere 0,7 mm $\leq D_s \leq$ 0,9 mm, aufweist.

10. Bauwerksabdichtbahn nach zumindest einem der vorhergehenden Ansprüche,
**dadurch gekennzeichnet,**
**dass** die Dichtungsbahn (12) aus zumindest einem Material aus der Gruppe PVC (Polyvinylchlorid), TPE (Thermoplastisches Elastomer), TPO (Thermoplastisches Elastomer auf Olefinbasis), TPV (Thermoplastisches Vulkanisat), EPDM (Ethylen-Propylen-Dien-Kautschuk), EVA (Ethylenvinylacetat), PP (Polypropylen), PE (Polyethylen), PA (Polyamid) besteht oder zumindest eines dieser Materialien enthält, und/oder dass die Selbstklebeschicht (18) besteht aus einem oder enthält zumindest ein Material aus der Gruppe Bitumen, Butyl, SBS (Styrol-Butadien-Styrol), SBR (Styrol-Butadien-Rubber), Acrylatverbindungen, Silan-terminierte Polymere oder Polyolefine oder anderer geeigneter gute Hafteigenschaften aufweisender Klebstoff.

11. Bauwerksabdichtbahn nach zumindest einem der vorhergehenden Ansprüche,
**dadurch gekennzeichnet,**
**dass** die Barriereschicht (16) vollflächig bauwerkseitige Fläche (14) der Dichtungsbahn (12) abdeckt.

12. Bauwerksabdichtbahn nach zumindest einem der vorhergehenden Ansprüche,
**dadurch gekennzeichnet,**
**dass** zur Bildung eines Schweißrandes (20) ein Längsrandbereich der Dichtungsbahn (12) von der Barriereschicht (16) unbedeckt ist, wobei vorzugsweise die Selbstklebeschicht (18) beabstandet zum schweißrandseitig verlaufenden Rand der Barriereschicht (16) verläuft.

13. Bauwerksabdichtbahn nach zumindest einem der vorhergehenden Ansprüche,
**dadurch gekennzeichnet,**
**dass** der Schweißrand (20) von der Barriereschicht (16) bedeckt ist.

14. Bauwerksabdichtbahn nach zumindest einem der vorhergehenden Ansprüche,
**dadurch gekennzeichnet,**
**dass** unabhängig von der Dichtungsbahn (12) die Bauwerksabdichtbahn (10) frei von einer Schicht aus Verstärkungsmaterial wie Vlies, Gelege, Gewebe und/oder Kombinationen dieser ist.

15. Verfahren zur Herstellung einer Bauwerksabdichtbahn (10, 100), nach einem der Ansprüche 1 bis 14, umfassend die Verfahrensschritte

   - Herstellen einer Dichtungsbahn (12),
   - Fixieren einer Barriereschicht (16) auf Polyamidbasis, insbesondere Copolyamidbasis, auf einer Seite der Dichtungsbahn,
   - Auftragen einer schmelzflüssigen Selbstklebeschicht (18) auf die Barriereschicht bei gleichzeitigem Schmelzen bzw. Aufschmelzen der Barriereschicht.

16. Verfahren nach Anspruch 15,
**dadurch gekennzeichnet,**
**dass** die mehrlagige Barriereschicht (16) in Form einer Barrierefolie unmittelbar auf die Dichtungsbahn (12) und die Selbstklebeschicht (18) unmittelbar auf die Barriereschicht aufgebracht werden, wobei insbesondere zum Fixieren der Barrierefolie (16) diese auf eine Temperatur $T_1$ mit 60 °C $\leq T_1 \leq$ 80 °C erwärmt wird, und/oder zum Aufschmelzen der Selbstklebeschicht (18) diese auf eine Temperatur T2 mit 120 °C $\leq T_2 \leq$ 180 °C erhitzt wird.

**Claims**

1. Edifice sealing web (10, 100), comprising a sealing web (12) facing away from the edifice, an adjoining barrier layer (16) which extends on the side facing the edifice and is based on mixtures of homopolyamides and/or copolyamides, and a self-adhesive layer (18), **characterized in that**,
the barrier layer (16) consists of at least two layers, of which a first layer is a hot melt adhesive layer (17) containing a copolyamide and a second layer is another layer (19) containing a homopolyamide.

2. Edifice sealing web according to Claim 1,
**characterized in that**,
the sealing web (12) is based on PVC-P (soft PVC), optionally containing a polymeric softening.

3. Edifice sealing web according to Claim 1,
**characterized in that**,
the barrier layer (16) is based on aliphatic polyamides, copolymers thereof or mixtures thereof, and containing optionally PA6, PA6.6 and/or PA12.

4. Edifice sealing web according to Claim 1,
**characterized in that**,
the second layer (19) containing the homopolyamide is designed to be multilayered and comprises at least one layer that is based on polyolefins, and/or **in that** the first layer (17) which extends on the sealing web side is designed to be multilayered and comprises at least one layer that is based on polyolefins.

5. Edifice sealing web according to at least one of the preceding claims,
**characterized in that**,
the barrier layer (16) contains or consists of

a) 10-95% by weight of a copolyamide that is based on a combination of equimolar quantities of piperazine and a C6-C20, as the case may be, amino substituted dicarboxylic acid
b) 5-90% by weight of a copolyamide, which contains polyether sequences,
c) as the case may be, 5-50% by weight of other copolyamides and, as the case may be, 0.5-15% by weight of additives.

6. Edifice sealing web according to at least one of the preceding claims,
**characterized in that**,
the barrier layer (16) consists of or contains

- a thermoplastic compound containing copolyamide of 70-99%, preferably 90-99%
- a lubricating agent or antiblocking agent of 0 to 30%, preferably of 2 to 5%
- a propellant of 0.2 to 30%, preferably of 0.2 to 1.0%.

7. Edifice sealing web according to at least one of the preceding claims,
**characterized in that**,
the barrier layer (16) is a fused film.

8. Edifice sealing web according to at least one of the preceding claims,
**characterized in that**,
the surface (14) of the sealing web (12) that is connected to the barrier layer (16) which extends on the side facing the edifice has a roughness of Ra = 2.5-10 $\mu$m and/or Rz = 20-50 $\mu$m and/or Rmax = 25-65 $\mu$m, wherein Rmax = the maximum roughness depth, Ra = the arithmetic mean roughness value, Rz = the averaged roughness depth.

9. Edifice sealing web according to at least one of the preceding claims,
**characterized in that**,
the barrier layer (16) has a thickness $D_B$ of 5 $\mu$m $\leq D_B \leq$ 300 $\mu$m, in particular of 25 $\mu$m $\leq D_B \leq$ 60 $\mu$m, and/or **in that** the self-adhesive layer (18) has a thickness $D_s$ of 0.5 mm $\leq D_s \leq$ 1.1 mm, in particular of 0.7 mm $\leq D_s \leq$ 0.9 mm.

10. Edifice sealing web according to at least one of the preceding claims,
**characterized in that**,

the sealing web (12) consists of at least one material from the group of PVC (polyvinyl chloride), TPE (thermoplastic elastomer), TPO (thermoplastic elastomer based on olefin), TPV (thermoplastic vulcanizate), EPDM (ethylene propylene diene rubber), EVA (ethylene vinyl acetate), PP (polypropylene), PE (polyethylene), PA (polyamide) or contains at least one of these materials, and/or **in that** the self-adhesive layer (18) consists of one or contains at least one material from the group of bitumen, butyl, SBS (styrene butadiene styrene), SBR (styrene butadiene rubber), acrylate compounds, silane terminated polymers or polyolefins or other suitable adhesives having good adhesive properties.

11. Edifice sealing web according to at least one of the preceding claims,
    **characterized in that**,
    the barrier layer (16) completely covers the surface (14) of the sealing web (12) on the side facing the edifice.

12. Edifice sealing web according to at least one of the preceding claims,
    **characterized in that**,
    to form a weld edge (20), a longitudinal edge region of the sealing web (12) is not covered by the barrier layer, wherein in particular the self-adhesive layer (18) runs at a distance from the edge of the barrier layer (16), which runs on the side of the weld edge.

13. Edifice sealing web according to at least one of the preceding claims,
    **characterized in that**,
    the weld edge (20) is covered by the barrier layer (16).

14. Edifice sealing web according to at least one of the preceding claims,
    **characterized in that**,
    independent of the sealing web (12), the edifice sealing web (10) is free of a layer of reinforcing material such as fleece, laminated fabric, fabric and/or combinations thereof.

15. Process for manufacturing an edifice sealing web (10, 100), according to one of Claims 1 to 14, comprising the processing steps

    - Manufacturing a sealing web (12),
    - Affixing a barrier layer (16) that is based on a polyamide, in particular based on a copolyamide, on one side of the sealing web,
    - Applying a molten self-adhesive layer (18) to the barrier layer while simultaneously melting or fusing the barrier layer.

16. Process according to Claim 15,
    **characterized in that**,
    the multilayer barrier layer (16) in the form of a barrier film is applied directly to the sealing web (12) and the self-adhesive layer (18) is applied directly to the barrier layer, wherein in particular for affixing the barrier film (16), said barrier film is heated to a temperature $T_1$ with $60°C \leq T_1 \leq 80°C$, and/or **in that** to fuse the self-adhesive layer (18), said self-adhesive layer is heated to a temperature T2 with $120°C \leq T_2 \leq 180°C$.

**Revendications**

1. Bande d'étanchéité de bâtiment (10, 100) comprenant une bande d'étanchéité (12) éloignée du bâtiment, une couche barrière (16) avoisinante, s'étendant du côté du bâtiment à base de mélanges d'homopolyamides et/ou de copolyamides ainsi qu'une couche autocollante (18).
   **caractérisée en ce**
   **que** la couche barrière (16) se compose d'au moins deux couches parmi lesquelles une couche de colle fusible (17) contenant un copolyamide constitue une première couche et une autre couche (19) contenant un homopolyamide constitue une seconde couche.

2. Bande d'étanchéité de bâtiment selon la revendication 1,
   **caractérisée en ce**
   la bande d'étanchéité (12) est basée sur du PVC-P (PVC souple), contenant le cas échéant un plastifiant polymère.

**3.** Bande d'étanchéité de bâtiment selon la revendication 1,
**caractérisée en ce**
**que** la couche barrière (16) est à base de polyamides aliphatiques, de copolymères de ceux-ci ou de mélanges de ceux-ci, et contient le cas échéant du PA6, PA6.6 et/ou du PA12

**4.** Bande d'étanchéité de bâtiment selon la revendication 1,
**caractérisée en ce**
**que** la seconde couche (19) contenant un homopolyamide est constituée de plusieurs couches et présente au moins une couche à base de polyoléfines, et/ou que la première couche (17) s'étendant du côté de la bande d'étanchéité est constituée de plusieurs couches et présente au moins une couche à base de polyoléfines.

**5.** Bande d'étanchéité de bâtiment selon au moins une des revendications précédentes,
**caractérisée en ce**
**que** la couche barrière (16) contient ou est composée de

a) 10-95 % en poids d'un copolyamide à base d'une combinaison de quantités équimolaires de pipérazine et d'un C6-C20, le cas échéant d'un acide dicarboxylique aminosubstitué
b) 5-90 % en poids d'un copolyamide qui contient des séquences de polyéther,
c) le cas échéant de 5-50 % en poids d'autres copolyamides et le cas échéant de 0,5-15 % en poids d'additifs.

**6.** Bande d'étanchéité de bâtiment selon au moins une des revendications précédentes,
**caractérisée en ce**
**que** la couche barrière (16) se compose de ou contient

- un composé thermoplastique contenant un copolyamide à 70 - 99 %, de préférence à 90 - 99 %
- un lubrifiant ou un agent anti-adhérent de 0 à 30 %, de préférence de 2 à 5 %
- un agent d'expansion de 0,2 à 30 %, de préférence de 0,2 à 1,0 %.

**7.** Bande d'étanchéité de bâtiment selon au moins une des revendications précédentes,
**caractérisée en ce**
**que** la couche barrière (16) est un film fondu dessus.

**8.** Bande d'étanchéité de bâtiment selon au moins une des revendications précédentes,
**caractérisée en ce**
**que** la surface (14) de la bande d'étanchéité (12), reliée à la couche barrière (16) et s'étendant côté bâtiment présente une rugosité avec Ra = 2,5 - 10 $\mu$m et/ou Rz = 20 - 50 $\mu$m et/ou Rmax = 25 - 65 $\mu$m, sachant que Rmax = amplitude de rugosité maximale, Ra = valeur moyenne arithmétique de rugosité, Rz = amplitude moyenne de rugosité.

**9.** Bande d'étanchéité de bâtiment selon au moins une des revendications précédentes,
**caractérisée en ce**
**que** la couche barrière (16) présente une épaisseur $D_b$ avec 5 $\mu$m $\leq D_b \leq$ 300 $\mu$m, notamment 25 $\mu$m $\leq D_b \leq$ 60 $\mu$m, et/ou que la couche autocollante (18) présente une épaisseur $D_s$ avec 0,5 mm $\leq D_s \leq$ 1,1 mm, notamment 0,7 mm $\leq D_s \leq$ 0,9 mm.

**10.** Bande d'étanchéité de bâtiment selon au moins une des revendications précédentes,
**caractérisée en ce**
**que** la bande d'étanchéité (12) se compose d'au moins un matériau du groupe PVC (poly(chlorure de vinyle)), TPE (élastomère thermoplastique), TPO (élastomère thermoplastique à base d'oléfine), TPV (vulcanisat thermoplastique), EPDM (caoutchouc éthylène-propylène-diène), EVA (éthylène-acétate de vinyle). PP (polypropylène), PE (polyéthylène), PA (polyamide) ou contient au moins un de ces matériaux, et/ou que la couche autocollante (18) se compose d'un ou contient au moins un matériau du groupe comprenant le bitume, butyle, SBS (styrène-butadiène-styrène), SBR (caoutchouc styrène-butadiène), composés d'acrylate, polymères modifiés silane ou polyoléfines ou autre colle présentant des propriétés adhésives adéquates.

**11.** Bande d'étanchéité de bâtiment selon au moins une des revendications précédentes,
**caractérisée en ce**
**que** la couche barrière (16) recouvre entièrement la surface côté bâtiment (14) de la bande d'étanchéité (12).

**12.** Bande d'étanchéité de bâtiment selon au moins une des revendications précédentes,
**caractérisée en ce**
**que** pour former le bord de soudure (20), une zone marginale longitudinale de la bande d'étanchéité (12) n'est pas recouverte par la couche barrière (16), sachant que de préférence la couche autocollante (18) est éloignée du bord de la couche barrière (16), s'étendant côté bord de soudure.

**13.** Bande d'étanchéité de bâtiment selon au moins une des revendications précédentes,
**caractérisée en ce**
**que** le bord de soudure (20) est recouvert par la couche barrière (16).

**14.** Bande d'étanchéité de bâtiment selon au moins une des revendications précédentes,
**caractérisée en ce**
**qu'**indépendamment de la bande d'étanchéité (12), la bande d'étanchéité de bâtiment (10) est exempte d'une couche composée de matériau de renfort tel que feutre, treillis, tissu et/ou combinaison de ces matériaux.

**15.** Procédé de fabrication d'une bande d'étanchéité de bâtiment (10, 100) selon une des revendications 1 à 14, comprenant les étapes de procédé suivantes

- fabrication d'une bande d'étanchéité (12),
- fixation d'une couche barrière (16) à base de polyamide, notamment à base de copolyamide, sur un côté de la bande d'étanchéité,
- application d'une couche autocollante (18) en fusion sur la couche barrière avec fusion ou application par fusion simultanée de la couche barrière.

**16.** Procédé selon la revendication 15,
**caractérisé en ce**
**que** la couche barrière multicouche (16) sous forme de film barrière est appliquée directement sur la bande d'étanchéité (12) et que la couche autocollante (18) est appliquée directement sur la couche barrière, sachant que notamment pour fixer le film barrière (16), celle-ci doit être chauffée à une température $T_1$ avec 60 °C $\leq T_1 \leq$ 80 °C, et/ou pour appliquer par fusion la couche autocollante (18), celle-ci est chauffée à une température $T_2$ avec 120 °C $\leq T_2 \leq$ 180 °C.

Fig. 1

10

12    14

16
18

20

A    B

Fig. 2

100

12    14

16
18

24

C

Fig. 3

1000 µm

867,64 µm

974,96 µm

2145,76 µm

2145,76 µm

18

EP 3 697 614 B1

1000 µm

Fig. 4

Fig. 5                    200

212
16
18

Fig. 6                    300

312
16
18

Fig. 7                    400

420    422    424

412
16
18

Fig. 8                    500

520    522    524    526

512
16
18

EP 3 697 614 B1

Fig. 9

Fig. 10

Fig. 11

**IN DER BESCHREIBUNG AUFGEFÜHRTE DOKUMENTE**

**In der Beschreibung aufgeführte Patentdokumente**

- DE 4403101 A
- EP 1500493 A
- DE 10334714 A
- DE 3503809 A
- EP 0704297 A
- GB 2138357 A
- US 6194049 B
- US 4442148 A
- EP 1407878 A
- EP 1741551 A
- EP 1444158 A1
- WO 2011069680 A1

**In der Beschreibung aufgeführte Nicht-Patentliteratur**

- **L. GLÜCK.** Einwirkung von Bitumen auf Kunststoff - Dach - und Dichtungsbahnen. *polymerweich-gemachte PVC-p-Bahnen,* 2003